# EUROPEAN PATENT APPLICATION

(11) **EP 1 988 420 A1**
(43) Date of publication of application: **05.11.2008**
(21) Application number: 07107434.8
(22) Date of filing: 03.05.2007
(51) Int. Cl.: G02B 27/22, G02B 3/14

(54) **Volumetric display device**

(71) Applicant: SeeReal Technologies S.A., 1528 Luxembourg (LU)
(72) Inventor: Kroll, Bo, London, W148 AA (GB); Olaya, Jean-Christophe, 01099, Dresden (DE)

(57) **Abstract**

The invention relates to a volumetric display device for generating a three-dimensional scene. In order to provide a volumetric display device which overcomes the drawbacks of the prior art and which is primarily less wavelength depending, the volumetric display device of the invention comprises a light source for providing light, focusing means with a plurality of focusing elements for receiving the light provided by the light source and creating a plurality of image points, each focusing element having a controllable focal length. The volumetric display device further comprises converging means for generating a visibility region from which a user may observe the three-dimensional scene represented by the plurality of image points when one or both of his eyes are situated in this area.

## Description

The present invention relates to a volumetric display device for generating a three-dimensional scene comprising a light source for providing light and focusing means with a plurality of focusing elements for receiving the light provided by the light source and creating a plurality of image points.

There are different types of 3D displays which create 3D imagery visible to the unaided eye, i.e. which do not require any auxiliary means, such as stereo glasses.

On the one hand, there are autostereoscopic displays. These provide the observer with an image for each eye, respectively. Several views are displayed on a system and are spatially or time-multiplexed. The eyes of the observer accommodate on the display surface, and converge at the distance where the 3D scene is supposed to be (based on stereoscopic disparity), possibly generating eyestrain.

On the other hand, there are volumetric displays which display a complete 3D scene in a way that the light points of the scene are physically generated at the real position where they are supposed to be. The eyes of the observer accommodate and converge at the distance where the 3D scene is reconstructed. In this case, there is no eyestrain.

One kind of volumetric displays are holographic displays. Since the light which makes up a real scene is not only specified by its amplitude and wavelength, but also by its phase, holographic displays generate a 3D scene by using coherent light for creating an interference pattern, wherein the complete information of the image (amplitude and phase) is provided. The image is reproduced by wavefront reconstruction. Holographic displays have the advantages that therewith images in real time can be produced that exhibit all the characteristics of the original scene. On the other hand, this technology is highly wavelength-depending and requires large amounts of computation as well as high resolution of the display.

Furthermore, there is the problem of speckling because of the required coherent illumination of holographic displays.

It is an object of the present invention to overcome the above drawbacks and provide a volumetric display device which is primarily less wavelength depending.

The object of the invention is achieved by a volumetric display device for generating a three-dimensional scene comprising a light source for providing light, focusing means with a plurality of focusing elements for receiving the light provided by the light source and creating a plurality of image points, each focusing element having a controllable focal length. The volumetric display device further comprises converging means for generating a visibility region. The visibility region is an area from which a user may observe the three-dimensional scene represented by the plurality of image points when one or both of his eyes are situated in this area.

The invention is based on the idea to illuminate an array of lenses with controllable focal lengths with a backlighting system. Thus, each lens of the array generates a point with a position depending on the distance of the backlighting system and the focal length of the lens. The depth of a thus generated 3D scene is defined by the available range of focal lengths of the lenses of the array. To display various 3D scenes there is a need to control actively the focal length of each lens independently from the other lenses. In this case, the depth resolution is defined by the ability to tune the focal length of the lenses continuously.

There are two separate effects. On the one hand there is a local convergence caused by the focusing means to provide a reconstruction of a 3D scene. On the other hand there is a global convergence caused by the converging means to provide a visibility region. The latter one is necessary in order to allow the user to observe the whole 3D scene, i.e. all image points generated by the focusing means. Otherwise the light dispersing from an image point may eventually not reach the users eye(s). In other words, every image point of the 3D scene is emitting light in a limited light cone, from which it (the image point) is visible. In order to make the whole 3D scene visible from a given position (or a given range of positions) it is necessary to generate an overlapping of these light cones, which is achieved by converging means, e.g. a field lens.

It is possible to characterize geometrically the properties of the visibility region. The size of the visibility region is proportional to the observer's distance to the volumetric display device and to the pitch of the focusing elements, and it is inverse proportional to the depth of the 3D scene. As a consequence, it may be reasonable to control the size of the visibility region by controlling the effective aperture of the focusing elements, for example, by use of shutter means in front of the lens array. The size of the visibility region is influenced by the converging means, too.

The concept of the invention provides several advantages. So the use of lenses is much more robust to chromatic effects than holographic patterns (apart from lens chromatic dispersion, which can be considered as minimal compared with the previous effect). Further, there is no need to calculate complicated wave propagation, since each light point corresponds to a single parameter - the focal length of a lens. This process does not require any coherence in the backlighting system. The absence of coherence means an absence of speckling and an absence of most diffraction issues.

A preferred embodiment of the volumetric display device according to the invention designates, that the light source comprises a plurality of light source elements, which preferably are controllable separately. That means that the intensity of each light source element is controllable independently from the other light source elements. At least this comprises the on- and off-state of a light source element. For example, this may be reached by shutter means, too. In another preferred embodiment, the light source elements comprise color elements, which provide light of different color. It is then preferred, that the color elements are controllable separately. By controlling the light source elements or the color elements separately a high flexibility is reached to illuminate the focusing means.

Further, it is preferred that the light source is a polychromatic light source, in particular, the light source is designed to provide illumination with three primary colors or white light, in which latter case it is further preferred that the volumetric display device further comprises color filtering means, in particular for realizing illumination with three primary colors. Illumination with three primary colors may, for example, be RGB illumination.

In another preferred embodiment of the invention the focusing means are an adaptive lens array, in particular an electrowetting lens array, with a plurality of adaptive lenses as focusing elements. Electrowetting lens arrays provide several advantages such as high rapidity of focal length change, continuous range of focal length, high transmission, low costs and no sensitivity to polarization.

A further preferred embodiment designates that the converging means are arranged to converge the light wave front emitted by the focusing means, thereby generating the visibility region. In particular, the converging means may be designed as a field lens, which may have a controllable focal length. Preferably, the field lens is a Fresnel lens. Fresnel lenses are technologically advantageous since they provide a small thickness in face of large dimensions. This supports the compactness of the volumetric display device.

In another preferred embodiment the volumetric display device further comprises offset means for realizing an offset of the position of the three-dimensional scene. The offset means preferably comprise a plurality of offset elements, each offset element being aligned with a focusing element, respectively. In a particular embodiment the offset elements have diverging characteristics. By using offset means a higher depth dynamic may be obtained.

In a further preferred embodiment the volumetric display device comprises confinement means for avoiding crosstalk. In particular, the confinement means comprise at least one light stop. In another embodiment, the confinement means comprise polarization filter means. In particular, the polarization filter means comprise first polarization filter means of a first polarization and second polarization filter means of a second polarization different from the first polarization. Preferably, the first polarization is orthogonal to the second polarization. In the case of polarization filter means as confinement means, it is preferred, that the light source is designed to provide polarized light. In particular, the light source comprises first light source elements providing light of the first polarization and second light source elements providing light of the second polarization.

As could be seen, the invention has the advantage to be less wavelength depending and can be used with incoherent light. Thus, the invention allows a more robust and less cost-intensive realization of a 3D display. Furthermore, the invention requires less computation time and facilitates real time visualization of scenes. Since no coherent light is needed, speckling and diffraction effects as there are with holographic displays can be avoided, e.g. low diffraction efficiency, artifacts due to inaccurate encoding of holograms, side diffraction lobes. Furthermore, the transmission of the usable light is maximized.

These and other aspects of the invention will be apparent from and elucidated with reference to the embodiments described hereinafter. In the following drawings
- Fig. 1: shows a configuration of a volumetric display device according to a first embodiment of the invention.
- Fig. 2: shows a configuration of a volumetric display device according to a second embodiment of the invention.
- Fig. 3: shows a configuration of a volumetric display device according to a third embodiment of the invention.

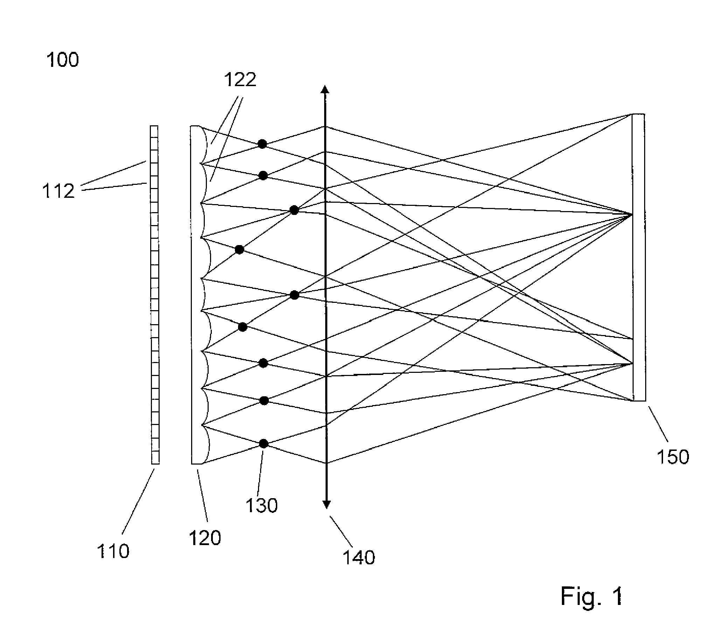

Fig. 1 shows a volumetric display device 100 according to a first embodiment of the invention. Therein the volumetric display device 100 comprises in the direction of light propagation a light source 10, focusing means 120 and converging means 140.

In this embodiment the light source 110 is a large-area, monochromatic light source providing incoherent light. The light source may be realized, for example, as a LED, TFT or OLED display. The light source 110 comprises a plurality of light source elements 112. The intensity of each light source element 112 can be controlled independently from the other light source elements. The focusing means 120 comprise a plurality of focusing elements 122. The focusing means 120 are realized as electrowetting lens array with a plurality of electrowetting lenses as focusing elements 122. The converging means 140 are realized as a Fresnel field lens.

For generating a three-dimensional scene which can be seen by a user from a visibility region 150, in this first embodiment, the light source 110 provides light which is directed on the focusing means 120. The focal length of each of the plurality of focusing elements 122 of the focusing means 120 is controlled to generate an image point 130 on a desired position, respectively. The light wave front thus created by the focusing means 120 is received by the converging means 140, the Fresnel field lens, which converges the light wave front received by the focusing means 120 and generates the visibility region 150. From the visibility region 150 the user may then observe the three-dimensional scene represented by the plurality of image points 130.

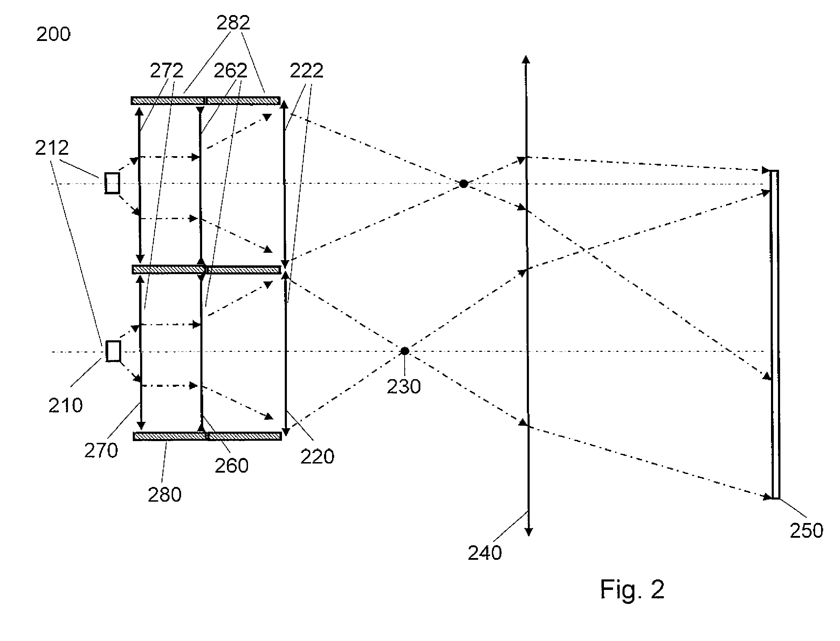

Fig. 2 shows a volumetric display device 200 according to a second embodiment of the invention. The volumetric display device 200 comprises in direction of light propagation a light source 210, collecting means 270, offset means 260, focusing means 220 and converging means 240. Further, the volumetric display device 200 comprises confinement means 280.

In this embodiment the light source 210 is a polychromatic light source with a plurality of light source elements 212 providing incoherent white light. The intensity of each light source element 212 can be controlled independently from the other light source elements. The light source may be realized for example as a LED, TFT or OLED display.

The collecting means 270 comprise a plurality of collecting elements 272. The collecting means 270 are realized as a collecting lens array with a plurality of collecting lenses 272, which collect the light emitted by the light source 210.

The offset means 260 comprise a plurality of offset elements 262, each being aligned with a collecting element 272, respectively. The offset means 260 may have a constant focal length. Since with an electrowetting lens array 220 only positive focal lengths and no negative focal lengths are generally realized, the offset means 260 in this embodiment are realized as an array of diverging lenses 262 in order to provide the possibility to create the 3D scene or parts of the 3D scene behind the volumetric display device 200. Compared with the distance between focusing means 220 and converging means 240 the distance between focusing means 220 and offset means 260 is small.

The focusing means 220 comprise a plurality of focusing elements 222, each focusing element 222 being aligned with an offset element 262, respectively. The focusing means 220 are realized as electrowetting lens array with a plurality of electrowetting lenses as focusing elements 222. The converging means 240 are realized as a Fresnel field lens.

Further, the volumetric display device 200 comprises confinement means 280 which are realized as light stops 282 to avoid that light diffuses to parts of the volumetric display device where it is not desired. On the one hand, in order to avoid crosstalk the light stops 280 are arranged between the collecting means 270, the offset means 260 and the focusing means 220 in the direction of light propagation, respectively. In this embodiment the dimension of the light stops 280, in the direction of light propagation, extends on the whole distance between these means - the collecting means 270, the offset means 260 and the focusing means 220. On the other hand, the confinement means 280 are arranged between adjacent elements of said means - collecting elements 272, offset elements 262 and focusing elements 222 -, respectively.

For generating a three-dimensional scene which can be seen by a user from a visibility region 250, in this second embodiment, the light source 210 provides light which is directed on the collecting means 270. The intensity of the light source elements 212 is controlled. The collecting means 270 collect the light emitted by the light source 210 and provide the collected light to the offset means 260. The confinement elements 282 between the collecting means 270 and the offset means 280 prevent that light passing from a collecting element 272 to an aligned offset element 262 passes to an adjacent offset element. The offset means 280 transmit the light to the focusing means 220, thereby, for example, diverging the light. The confinement elements 282 between the offset means 280 and the focusing means 220 prevent that light passing from an offset element 282 to an aligned focusing element 222 passes to an adjacent focusing element. The focal length of each of the plurality of focusing elements 222 of the focusing means 220 is controlled to generate an image point 230 on a desired position, respectively. The light wave front thus created by the focusing means 220 is received by the converging means 240, the Fresnel field lens, which converges the light wave front received by the focusing means 220 and generates the visibility region 250. From the visibility region 250 the user may then observe the three-dimensional scene represented by the plurality of image points 230.

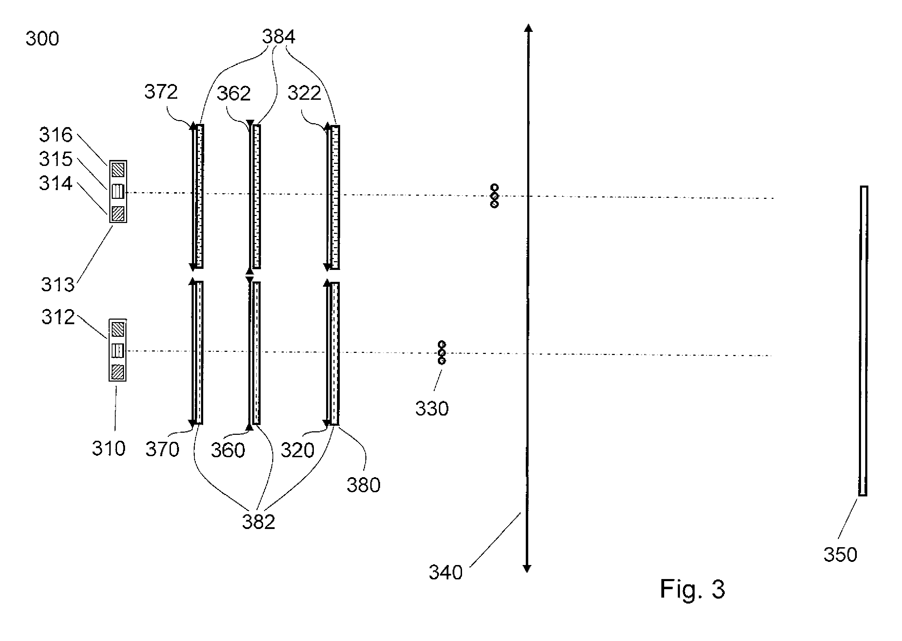

Fig. 3 shows a volumetric display device 300 according to a third embodiment of the invention. The volumetric display device 300 comprises in direction of light propagation a light source 310, collecting means 370, offset means 360, focusing means 320 and converging means 340. Further, the volumetric display device 300 comprises confinement means 382, 384.

In this embodiment the light source 310 is a polychromatic light source providing incoherent, polarized light. The light source may be realized, for example, as a LED, TFT or OLED display. The light source 310 comprises a plurality of light source elements 312, 313, each light source element comprising color elements 314, 315, 316, respectively. The intensity of each color element 314, 315, 316 can be controlled independently from the other color elements. The color elements 314, 315, 316 provide primary colors, e.g. red, green and blue color, respectively. In this embodiment, the color elements 314, 315, 316 are linearly aligned, like for example on an LCD. Adjacent light source elements 312, 313 provide light of different polarization. In this embodiment there are first light source elements 312 providing light of a first polarization and second light source elements 313 providing light of a second polarization different from the first polarization. In particular, the polarization axes of the first and second polarization are orthogonal.

The collecting means 370 comprise a plurality of collecting elements 372. The collecting means 370 are realized as a collecting lens array with a plurality of collecting lenses 372, which collect the light emitted by the light source 310.

The offset means 360 comprise a plurality of offset elements 362, each being aligned with a collecting element 372, respectively. The offset means 360 may have a constant focal length. Since with an electrowetting lens array 320 only positive focal lengths and no negative focal lengths are generally realized, the offset means 360 are realized as an array of diverging lenses 362 in order to provide the possibility to create the 3D scene or parts of the 3D scene behind the volumetric display device 300. Compared with the distance between focusing means 320 and converging means 340 the distance between focusing means 320 and offset means 360 is small.

The focusing means 320 comprise a plurality of focusing elements 322, each focusing element 322 being aligned with an offset element 362, respectively. The focusing means 320 are realized as electrowetting lens array with a plurality of electrowetting lenses as focusing elements 322. The converging means 340 are realized as a Fresnel field lens.

Further, the volumetric display device 300 comprises confinement means 380 which are realized as polarization filters 382, 384 to avoid that light diffuses to parts of the volumetric display device where it is not desired. In order to avoid crosstalk the confinement means 380 are arranged, in the direction of light propagation, behind the collecting means 370, behind the offset means 380 and behind the focusing means 320. The distance between the confinement means 380 and the means 370, 360, 320 is small compared with the distance between these means 370, 360, 320 themselves. Each polarization filter 382, 384 is aligned with an element of said means - collecting lens element 372, offset element 362, focusing element 322 -, respectively. Adjacent polarization filter means 382, 384, which are aligned to adjacent elements 372, 362, 322, respectively, have different polarization axes. In this embodiment there are exemplarily two kinds of polarization filters - first polarization filter means 382 transmitting light of the first polarization provided by the first light source elements 312, and second polarization filter means 384 transmitting light of the second polarization provided by the second light source elements 313. In this embodiment the polarization axes of the first 382 and second 384 polarization filter means are orthogonal to each other. In the direction of light propagation polarization filter means 382, 384 with the same polarization axis follow each other. In this embodiment first polarization filter means 382 follow each other and second polarization filter means 384 follow each other.

For generating a three-dimensional scene which can be seen by a user from the visibility region 350, in this third embodiment, the light source 310 provides light which is directed on the collecting means 370. The intensity of the color elements 314, 315, 316 is controlled. The collecting means 370 collect the light emitted by the light source 310 and provide the collected light to the offset means 360. The confinement means 380 between the collecting means 370 and the offset means 360 prevent that light passing from a collecting element 372 to an aligned offset element 362 passes to an adjacent offset element. The offset means 360 transmit the light to the focusing means 320, thereby, for example, diverging the light. The confinement means 380 between the offset means 360 and the focusing means 320 prevent that light passing from an offset element 362 to an aligned focusing element 322 passes to an adjacent focusing element. The focal length of each of the plurality of focusing elements 322 of the focusing means 320 is controlled to generate an image point 330 on a desired position, respectively. The light wave front thus created by the focusing means 320 is received by the converging means 340, the Fresnel field lens, which converges the light wave front received by the focusing means 320 and generates the visibility region 350. From the visibility region 350 the user may then observe the three-dimensional scene represented by the plurality of image points 330.

While the invention has been illustrated and described in detail in the drawings and foregoing description, such illustration and description are to be considered illustrative or exemplary and not restrictive. The invention is not limited to the disclosed embodiments. Other variations to the disclosed embodiments and other combinations of features of the disclosed embodiments can be understood and effected by those skilled in the art.

For example, in alternative embodiments the order of the means may be changed. It is then reasonable that the means are arranged close together.

Further, in an alternative embodiment the light source may be a point light source in combination with collimating means and shutter means for generating a light matrix. It may be reasonable to provide confinement means behind the light source matrix, in the direction of light propagation, to avoid crosstalk.

Further, in case of a white light source, there may be color filter means arranged behind the white light source, in the direction of light propagation, and color multiplexing may be performed. It is then reasonable that the single color elements of color filter means are controllable separately from each other.

In an alternative embodiment comprising a light source with color elements, the different color elements are centered and form a color unit, respectively. The center of the color unit is aligned with a collecting element, respectively.

In an alternative embodiment, it may be reasonable to have a tiltable or movable illumination. Further, the light source may provide coherent light. (It has to be noted, that in case of use of coherent light there are many side-effects which may be not desired and have to be counteracted.) If the light source is not naturally polarized a polarization filter may be added behind the light source, in the direction of light propagation, for generating a polarization.

In another alternative embodiment the focusing elements may be realized for example as liquid crystal lenses based on bi-refringency effect or based on concentration gradient. The focusing means may be realized by any other suitable component, too.

Further alternatively, the converging means may be designated to converge the light of the light source prior to the focusing means. For example, the converging means may be realized by a converged light source, so the light wave front of the light source is converged before impinging the focusing means, thereby creating the visibility region.

In an alternative embodiment, the offset means may be arranged behind the focusing means, in the direction of light propagation. Further alternatively, the offset means may comprise an array of converging lenses. Moreover, an offset means may be renounced at all, for example, in the case, that the focusing means may generate convergence and divergence itself.

In an alternative embodiment, the collecting means collimate the light emitted by the light source. Further, the collecting means and the offset means may be provided as a single unit, i.e. one single lens or array system comprising both functions, or they are in any manner conjoint. Thereby the risks of parasite light and artifacts, e.g. reflection between two structures, light passing through unexpected part of a structure are minimized. In a further embodiment, the collecting means are arranged close to the light source. For example, in the case of an OLED matrix as the light source, the emission angle is extremely extended, which requires a restriction of the light through a collecting lens, which is preferably placed directly on the OLED matrix. In still a further embodiment, there are no collecting means at all. Preferably, the distance between the collecting means and the focusing means should be minimized. Even more preferably, the whole volumetric display device is as compact as possible.

It has to be noted, that in general, if the volumetric display device comprises several means with a matrix structure (e.g. a focusing matrix, an offset matrix), it is reasonable that the single matrix elements of these means are aligned to each other. It is then reasonable that between these means (regarding the direction of light propagation) and their elements (regarding the direction substantially orthogonal to the direction of light propagation) confinement means are arranged to avoid crosstalk.

In alternative embodiments, in order to avoid crosstalk, light stops may be arranged only on parts of the distance between these means, for example close to the previous means or close to the following means, respectively. As well, while in the third embodiment the polarization filter means are arranged close to and behind the adjacent elements - collecting elements, offset elements, focusing elements - in an alternative embodiment the polarization filter means may be arranged close to and in front of the following elements, respectively. In alternative embodiments it is also possible to have both light stops and polarization filter means as confinement means.

In further alternative embodiments it is also possible to have wave length filters as confinement means, i.e. adjacent wave length filters transmit light of different wavelengths. It is then reasonable that the volumetric display device has a corresponding light source, i.e. the light source elements provide light of the respective wavelengths.

A way to increase the number of points of the 3D scene is to use time multiplexing. Thereby the z-resolution of the 3D scene may be increased. All solutions of time multiplexing can of course be considered.

The invention provides a volumetric display device, which is wavelength independent and therefore may be used with incoherent light. Beyond it, the invention allows a more robust and less cost-intensive realization of a 3D display, which requires less computation time and facilitates real time visualization of scenes.

The volumetric display device according to the invention is applicable in several areas, such as medicine, automotive industry and entertainment industry, for presenting 3D scenes.

In the claims, the word "comprising" does not exclude other elements, and the indefinite article "a" or "an" does not exclude a plurality. A single element or other unit may fulfill the functions of several items recited in the claims. Any reference signs should not be construed as limiting the scope.

## Claims

1. Volumetric display device (100, 200, 300) for generating a three-dimensional scene, comprising:
a light source (110, 210, 310) for providing light,
focusing means (120, 220, 320) with a plurality of focusing elements (122, 222, 322) for receiving the light provided by the light source and creating a plurality of image points (130, 230, 330), each focusing element having a controllable focal length, and
converging means (140, 240, 340) for generating a visibility region (150, 250, 350) from which a user may observe the three-dimensional scene represented by the plurality of image points.

2. Volumetric display device according to one of the preceding claims, wherein the light source (210, 310) comprises a plurality of light source elements (212, 312, 313).

3. Volumetric display device according to claim 2, wherein the light source elements (212, 312, 313) are controllable separately.

4. Volumetric display device according to claim 2 or 3, wherein the light source elements (312, 313) comprise color elements (314, 315, 316) providing light of different color.

5. Volumetric display device according to claim 4, wherein the color elements (314, 315, 316) are controllable separately.

6. Volumetric display device according to one of the preceding claims, wherein the light source (210, 310) is a polychromatic light source.

7. Volumetric display device according to claim 6, wherein the light source (310) is designed to provide illumination with three primary colors.

8. Volumetric display device according to claim 6, wherein the light source (210) is designed to provide white light.

9. Volumetric display device according to claim 8, further comprising color filtering means.

10. Volumetric display device according to claim 9, wherein the color filtering means are designated for providing illumination with three primary colors.

11. Volumetric display device according to one of the preceding claims, wherein the focusing means (120, 220, 320) are an adaptive lens array with a plurality of adaptive lenses as focusing elements (122, 222, 322).

12. Volumetric display device according to claim 11, wherein the adaptive lens array is an electrowetting lens array.

13. Volumetric display device according to one of the preceding claims, wherein the converging means (140, 240, 340) are arranged to converge the light wave front emitted by the focusing means (120, 220, 320), thereby generating the visibility region (150, 250, 350).

14. Volumetric display device according to one of the preceding claims, wherein the converging means (140, 240, 340) are a field lens.

15. Volumetric display device according to claim 14, wherein the field lens has a controllable focal length.

16. Volumetric display device according to claim 14, wherein the field lens is a Fresnel lens.

17. Volumetric display device according to one of the preceding claims, further comprising offset means (260, 360) for realising an offset of the position of image points (230, 330) of the three-dimensional scene.

18. Volumetric display device according to claim 17, wherein the offset means (260, 360) comprise a plurality of offset elements (262, 362), each offset element being aligned with a focusing element (222, 322), respectively.

19. Volumetric display device according to claim 18, wherein the offset elements (262, 362) have diverging characteristics.

20. Volumetric display device according to one of the preceding claims, further comprising confinement means (280, 380) for avoiding crosstalk.

21. Volumetric display device according to claim 20, wherein the confinement means (280) comprise at least one light stop (282).

22. Volumetric display device according to claim 20 or 21, wherein the confinement means (380) comprise polarization filter means (382, 384).

23. Volumetric display device according to claim 22, wherein the polarization filter means (382, 384) comprise first polarization filter means (382) of a first polarization and second polarization filter means (384) of a second polarization different from the first polarization.

24. Volumetric display device according to claim 23, wherein the first polarization is orthogonal to the second polarization.

25. Volumetric display device according to claim22 to 24, wherein the light source (310) is designed to provide polarized light.

26. Volumetric display device according to claim 23 or 24, wherein the light source (310) comprises first light source elements (312) providing light of the first polarization and second light source elements (313) providing light of the second polarization.
